# FASCICULE DE BREVET EUROPEEN

(11) **EP 1 686 683 B1**
(45) Date de publication et mention de la délivrance du brevet: **16.01.2008**
(21) Numéro de dépôt: 06100796.9
(22) Date de dépôt: 24.01.2006
(51) Int. Cl.: H02P 3/18

(54) **Procédé et système de gestion de la tension sur le bus continu d'un variateur de vitesse pour moteur électrique.**
Verfahren und System zur Verwaltung der Spannung auf den Bus eines Geschwindigkeitsreglers
Method and system for managing the voltage on the DC bus of a speed controller for an AC motor

(30) Priorité: 27.01.2005 FR 0550239
(43) Date de publication de la demande: 02.08.2006
(73) Titulaire: Schneider Toshiba Inverter Europe SAS, 27120 Pacy sur Eure (FR)
(72) Inventeur: Nguyen Phuoc, Vinh Tung, 92100, Boulogne Billancourt (FR)
(74) Mandataire: Bié, Nicolas

(56) Documents cités:
- EP-A- 0 549 004
- US-A- 5 583 412
- US-B1- 6 429 612
- US-B1- 6 577 483
- PATENT ABSTRACTS OF JAPAN vol. 005, no. 129 (E-070), 19 août 1981 (1981-08-19) & JP 56 066189 A (FUJI ELECTRIC CO LTD), 4 juin 1981 (1981-06-04)

## Description

La présente invention se rapporte à un procédé et un système de gestion de la tension sur le bus continu d'un variateur de vitesse pour moteur électrique à courant alternatif relié à un réseau de distribution de courant, ledit variateur fonctionnant selon une loi de commande en tension de type U/F.

De manière connue, un variateur de vitesse classique pour moteur électrique comporte un bus continu reliant le moteur électrique au réseau de distribution de courant électrique. Ce bus continu porte notamment un pont redresseur à diodes, un filtre à condensateur et un pont onduleur à transistors et diodes.

En fonctionnement normal, l'énergie électrique est transférée du réseau de distribution de courant vers le moteur électrique. Cependant, dans certaines situations, l'énergie du moteur peut être régénérée vers le condensateur du bus continu. Ces situations sont les suivantes :
- Freinage excessif et trop rapide du moteur (temps de décélération trop court ou couple de freinage trop élevé),
- à vitesse constante du moteur, entraînement du moteur par la charge,
- coupure du réseau de distribution de courant.

Dans ces situations particulières, le condensateur du bus continu peut être soumis à des surtensions susceptibles de l'endommager.

Dans l'état de la technique, ces différentes situations sont gérées de la manière suivante :

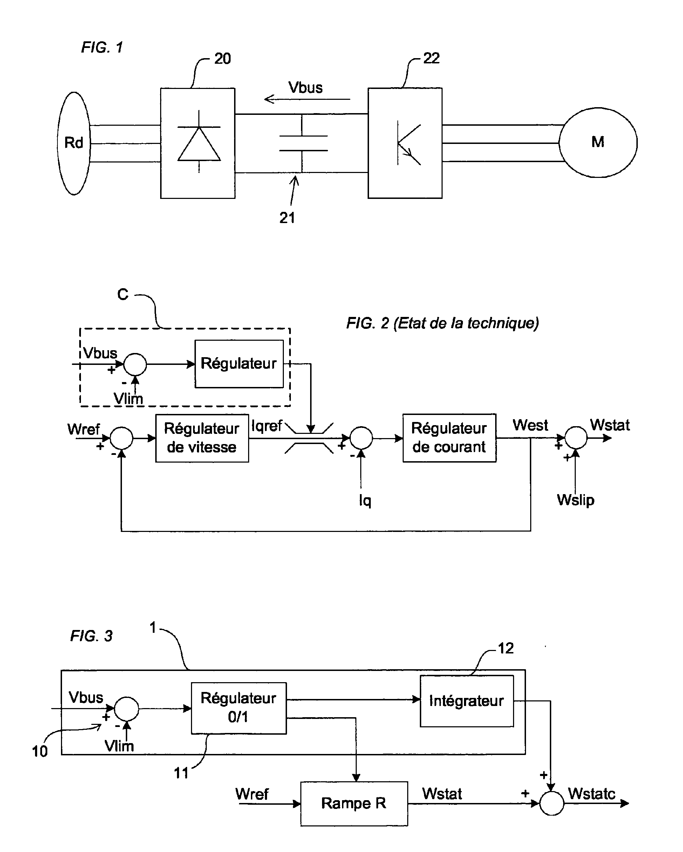

En référence à la figure 2, dans un variateur de vitesse classique fonctionnant selon une loi de commande de type vectorielle il existe généralement une boucle de vitesse et une boucle de courant. Une fréquence de référence Wref est imposée en entrée et est comparée à une fréquence estimée West obtenue en sortie. La différence entre les deux fréquences est amplifiée par un régulateur de vitesse fournissant en sortie une référence de courant lqref. La différence entre la référence de courant lqref et la valeur du courant Iq mesurée sur le moteur est amplifiée par un régulateur de courant pour fournir la fréquence estimée West. La fréquence Wstat de commande envoyée au stator du moteur est la somme de la fréquence estimée West et de la compensation de glissement Wslip.

Dans les situations décrites ci-dessus, afin de protéger le condensateur contre les surtensions, un circuit C de régulation de tension est utilisé. Ce circuit C de régulation de tension compare tout d'abord la valeur de la tension Vbus mesurée sur le bus continu à une valeur limite Vlim déterminée. Cette valeur limite correspond à la valeur au-dessus de laquelle le condensateur du bus continu subit des surtensions susceptibles de l'endommager.

En cas de freinage excessif du moteur, la sortie du circuit C de régulation de tension diminue la référence de courant Iqref de manière à réduire le courant renvoyé par le moteur sur le bus continu et à faire en sorte que la tension Vbus mesurée sur le bus continu revienne à une valeur inférieure à la valeur limite Vlim.

Lorsque le moteur est entraîné par la charge à vitesse constante, le circuit C de régulation de tension augmente la référence de courant Iqref de manière à augmenter la fréquence estimée West et la vitesse du moteur et ainsi à limiter la tension sur le bus continu.

En cas de coupure de courant sur le réseau de distribution, la valeur limite Vlim est abaissée et le circuit C de régulation de tension impose alors une référence de courant Iqref adéquate pour faire décélérer le moteur lentement en optimisant la consommation du courant disponible.

Dans un variateur de vitesse fonctionnant selon une loi de commande en tension de type U/F et non vectorielle comme présenté ci-dessus, aucune boucle de courant ou de vitesse n'est tolérée. Un tel variateur de vitesse est certes moins performant mais s'avère beaucoup plus robuste et pourra notamment être utilisé dans des produits tels que des transformateurs ou des ventilateurs.

En cas de freinage excessif du moteur, il est connu par la demande de brevet JP 56066189 de gérer la tension sur le bus continu d'un variateur de vitesse pour protéger le condensateur du bus continu. Un comparateur est chargé de comparer la valeur de la tension mesurée aux bornes du condensateur avec une valeur limite. Lorsque la valeur de la tension mesurée aux bornes du condensateur est supérieure à une valeur limite, le signal de sortie du comparateur commande l'interruption de la décélération. La fréquence du stator est donc maintenue à une valeur constante. Lorsque la valeur de la tension prise aux bornes du condensateur devient de nouveau inférieure à la valeur limite, le comparateur n'agit plus sur la fréquence et celle-ci peut à nouveau décroître suivant une rampe ayant une pente de valeur déterminée. Un tel dispositif permet de limiter les surtensions subies par le condensateur du bus continu lors d'un freinage excessif. Cependant, après l'action du comparateur sur la rampe, la reprise de la décélération se fait directement suivant la pente nominale de la rampe de décélération. La décélération du moteur se produit donc par à-coups successifs susceptibles de dégrader à terme le fonctionnement du moteur.

Le but de l'invention est de proposer un procédé de gestion de la tension sur le bus continu d'un variateur de vitesse pour moteur électrique à courant alternatif, fonctionnant selon une loi de commande en tension de type U/F et dans lequel, en cas de freinage excessif, la décélération du moteur se produit sans à-coups tout en préservant le condensateur du bus continu des surtensions provoquées par le freinage excessif.

Ce but est atteint par un procédé de gestion de la tension sur le bus continu d'un variateur de vitesse pour moteur électrique à courant alternatif relié à un réseau de distribution de courant, ledit variateur comportant sur son bus continu des circuits électroniques et fonctionnant selon une loi de commande en tension de type U/F dans laquelle une rampe interne d'accélération/décélération du moteur, ayant une pente de valeur initiale déterminée, est intercalée entre une fréquence de référence imposée en entrée de la loi de commande dudit variateur de vitesse et une fréquence du stator obtenue en sortie de cette loi. Ledit procédé se caractérise en ce qu'il consiste à :
- Comparer une valeur de la tension mesurée sur le bus continu avec une valeur limite déterminée,
- lorsque la valeur de la tension mesurée sur le bus continu devient supérieure à la valeur limite, forcer la pente de la rampe interne à une valeur nulle afin de conférer au stator une fréquence constante,
- lorsque la valeur de la tension mesurée sur le bus continu devient de nouveau inférieure à la valeur limite, augmenter progressivement, par exemple suivant une constante de temps déterminée, la valeur de la pente de la rampe interne.

Selon l'invention, un tel procédé permet de limiter le ralentissement du moteur et donc d'éviter les surtensions sur le bus continu.

Selon une particularité, l'augmentation progressive de la pente de la rampe interne est réalisée entre sa valeur nulle et sa valeur initiale. Lors de l'augmentation progressive de la pente de la rampe interne, et avant que celle-ci n'ait atteint sa valeur initiale, la tension mesurée sur le bus peut devenir de nouveau supérieure à la valeur limite. Dans ce cas, la pente de la rampe interne doit de nouveau être remise à une valeur égale à zéro pour conférer au moteur une vitesse constante et attendre une nouvelle baisse de la tension mesurée sur le bus continu.

Selon une autre particularité, dès l'instant où une baisse de la fréquence de référence est détectée, la valeur de la pente de la rampe interne est mise à zéro. Il s'agit dans ce cas d'anticiper éventuellement un freinage excessif du moteur.

Selon une autre particularité, lorsque la fréquence de référence est constante et lorsque la valeur de la tension mesurée sur le bus continu est supérieure ou égale à la valeur limite, le procédé consiste également à calculer à l'aide d'un intégrateur une valeur de correction à la fréquence du stator et à ajouter cette valeur calculée à la fréquence du stator. Une telle caractéristique permet notamment de gérer les surtensions lorsque le moteur se trouve entraîné par la charge.

Selon une autre particularité, lorsque la tension mesurée sur le bus continu a une valeur inférieure à la valeur limite, la sortie de l'intégrateur est mise à zéro de manière à n'appliquer aucune correction à la fréquence du stator.

Selon une autre particularité, lorsqu'une coupure du réseau de distribution de courant est détectée, il consiste également à abaisser la valeur limite à une valeur minimale définie comme la valeur de tension suffisante pour alimenter les circuits électroniques du bus continu. Lors d'une coupure du réseau de distribution, la fréquence de référence diminue fortement. Dans ce cas, il s'agit non seulement de limiter la décélération du moteur mais également de maintenir le moteur en fonctionnement le plus longtemps possible en espérant un rétablissement rapide du réseau de distribution. Pour cela, on optimise la consommation du courant restant.

Le but de l'invention est également de proposer un système de gestion de la tension sur le bus continu d'un variateur de vitesse pour moteur électrique à courant alternatif apte à mettre en oeuvre le procédé décrit ci-dessus et à gérer les différentes situations décrites ci-dessus.

Ce système se caractérise en ce qu'il comporte notamment :
- Un circuit de régulation de la tension comportant des moyens pour comparer la valeur d'une tension mesurée sur le bus continu à une valeur limite et, lorsque la valeur de la tension mesurée sur le bus continu est supérieure à une valeur limite, des moyens pour forcer la pente de la rampe interne à une valeur nulle afin de maintenir la fréquence du stator à une valeur constante, et
- lorsque la valeur de la tension mesurée sur le bus continu devient inférieure à la valeur limite, des moyens de commande pour commander, par exemple suivant une constante de temps déterminée, une augmentation progressive de la valeur de la pente de la rampe interne.

Selon l'invention, le circuit de régulation comporte par exemple un comparateur pour comparer la valeur de la tension mesurée sur le bus continu avec la valeur limite et un régulateur pour commander la mise à zéro de la rampe interne.

Selon une particularité, ce système comprend également des moyens pour mettre la pente de la rampe interne à une valeur égale à zéro dès l'instant où une décélération de la fréquence du stator est commandée.

Selon une autre particularité, le circuit de régulation de tension comporte également un intégrateur apte à calculer une fréquence de correction à imposer à la fréquence du stator lorsque la fréquence de référence est constante et lorsque la tension mesurée sur le bus continu a une valeur supérieure ou égale à la valeur limite.

Selon une autre particularité, l'intégrateur comporte des moyens pour limiter sa sortie à une valeur égale à zéro lorsque la tension mesurée sur le bus continu a une valeur inférieure à la valeur limite.

Selon une autre particularité, le système comprend des moyens pour détecter une coupure du réseau de distribution de courant et pour, dans cette situation, abaisser la valeur limite à une valeur minimale définie comme la valeur de tension suffisante pour alimenter les circuits électroniques du bus continu du variateur de vitesse.

Il s'agit donc selon l'invention de proposer un système complet de gestion de la tension sur le bus continu d'un variateur de vitesse permettant de faire face à différentes situations susceptibles de provoquer des surtensions sur le bus continu et donc d'endommager le condensateur présent sur ce bus.

D'autres caractéristiques et avantages vont apparaître dans la description détaillée qui suit en se référant à un mode de réalisation donné à titre d'exemple et représenté par les dessins annexés sur lesquels :
- La figure 1 représente schématiquement et en partie un variateur de vitesse relié à un moteur électrique à courant alternatif.
- La figure 2 représente, à partir d'un schéma fonctionnel, le fonctionnement selon l'art antérieur d'un variateur de vitesse classique apte à gérer les surtensions sur le bus continu du variateur de vitesse.
- La figure 3 représente, à partir d'un diagramme fonctionnel, le fonctionnement selon l'invention d'un variateur de vitesse fonctionnant selon une loi de commande de type U/F apte à gérer les surtensions sur le bus continu du variateur de vitesse.
- La figure 4 représente des diagrammes illustrant, lors d'un freinage excessif du moteur, le fonctionnement d'un variateur de vitesse utilisant le système de gestion de la tension selon l'invention.
- La figure 5 représente des diagrammes illustrant, lors d'une coupure du réseau de distribution de courant, le fonctionnement d'un variateur de vitesse utilisant le système de gestion de la tension selon l'invention.

La figure 2 concerne l'art antérieur et a déjà été décrite précédemment.

En référence à la figure 1, un variateur de vitesse pour moteur électrique à courant alternatif comporte sur un bus continu reliant un réseau de distribution de courant Rd au moteur M, des circuits électroniques, notamment un pont redresseur à diodes 20, un filtre à condensateur 21 et un pont onduleur à transistors et diodes 22. L'onduleur 22 est par exemple un onduleur de tension usuel commandé en Modulation de Largeur d'Impulsions dit onduleur MLI. Un tel onduleur MLI délivre au moteur M une suite d'impulsions d'amplitude fixe, positive ou négative et modulées en largeur, selon une loi de commande en tension. Les interrupteurs électroniques de l'onduleur sont pilotés par un circuit de contrôle comportant notamment un microcontrôleur.

Dans un variateur de vitesse fonctionnant selon une loi de commande en tension de type U/F, aucune boucle de courant n'est utilisée. Ainsi, selon cette loi de commande, la fréquence de référence Wref imposée en entrée d'un variateur de vitesse est toujours égale à la fréquence de commande du stator Wstat en sortie du variateur de vitesse.

Comme expliqué précédemment, dans certaines situations, l'énergie normalement transférée du réseau de distribution de courant Rd vers le moteur M via les circuits électroniques portés par le bus continu du variateur de vitesse, peut être régénérée vers le condensateur 21 du bus continu. C'est le cas notamment lors d'un freinage excessif du moteur M, lorsque le moteur M se trouve entraîné par la charge ou lors d'une coupure du réseau de distribution de courant Rd.

Afin de protéger le condensateur 21 des surtensions, il est donc nécessaire de prévoir un procédé de gestion de la tension du bus continu du variateur de vitesse mis en oeuvre dans un système approprié.

En référence à la figure 3, dans le système de gestion de la tension du bus continu selon l'invention, une rampe interne R d'accélération/décélération du moteur est introduite dans la loi de commande en tension de type U/F. Cette rampe interne R présente une pente de valeur initiale (Pi) déterminée suivant laquelle, lors d'une décélération, la fréquence du stator Wstat obtenue en sortie suit la fréquence de référence Wref imposée en entrée. En fonctionnement normal, cette rampe est suffisamment rapide pour qu'aucun retard ne soit observable entre une consigne de vitesse et une réaction correspondante du moteur M.

Des moyens de mesure sont chargés en permanence de mesurer la tension sur le bus continu. La valeur de cette tension Vbus mesurée est ensuite traitée par un circuit 1 de régulation de la tension comportant un comparateur 10 et un régulateur 11. Ce comparateur 10 compare la valeur de la tension Vbus mesurée sur le bus continu du variateur avec une valeur limite Vlim mémorisée.

Lorsque la tension Vbus est inférieure à la valeur limite Vlim, la sortie du comparateur 10 est négative, le régulateur 11 n'est donc pas activé et fournit une sortie négative n'ayant aucun effet sur la rampe interne R.

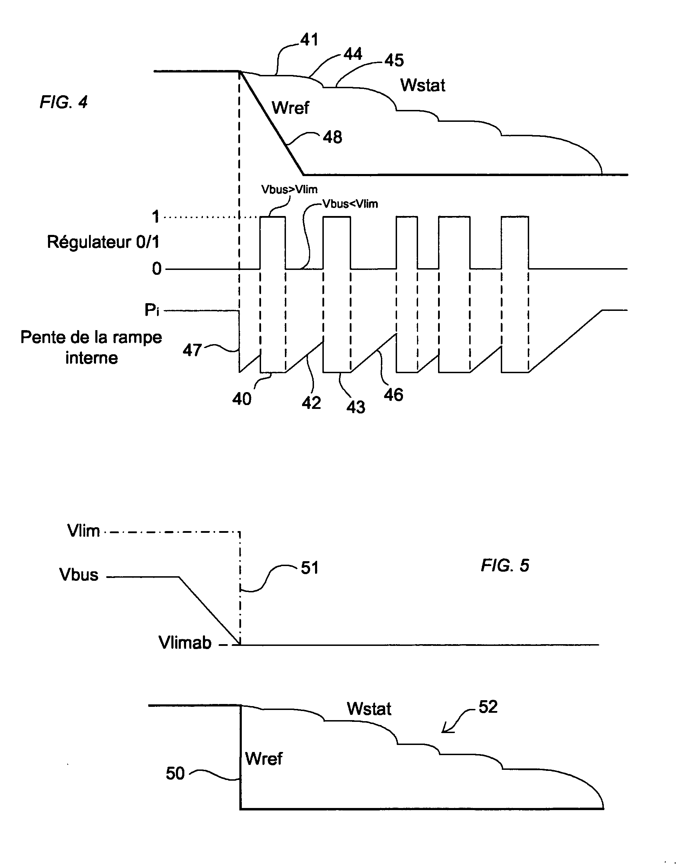

Lors d'un freinage excessif du moteur M (temps de décélération trop court ou couple de freinage trop élevé), la fréquence de référence Wref diminue fortement (48, figure 4) et la tension Vbus mesurée sur le bus continu augmente fortement jusqu'à dépasser la valeur limite Vlim. Dans une telle situation, la sortie du comparateur 10 est positive ce qui entraîne l'activation du régulateur 11. Le régulateur 11 fournit alors une sortie positive et vient alors agir sur la rampe interne R en attribuant à sa pente une valeur égale à zéro (40, figure 4). Ainsi, avec une rampe de décélération présentant une pente de valeur nulle, la fréquence du stator Wstat cesse de décroître (41, figure 4) et le moteur M fonctionne désormais à vitesse constante. Tant que la tension Vbus mesurée sur le bus continu du variateur de vitesse est supérieure à la valeur limite Vlim, la sortie positive du régulateur 11 gèle la valeur de la pente de la rampe interne R à zéro (40). En maintenant le moteur M à une vitesse constante pendant un certain temps, l'énergie qui a été régénérée sur le bus continu décroît progressivement. Lorsque la valeur de la tension Vbus mesurée sur le bus continu devient de nouveau inférieure à la valeur limite Vlim, la sortie du comparateur 10 devient de nouveau négative ce qui a pour conséquence la désactivation du régulateur 11. Le régulateur 11 génère alors une sortie négative qui libère la rampe interne R. La rampe interne R peut alors reprendre sa pente initiale (Pi) pour poursuivre la décélération. Selon l'invention, après son maintien à zéro, la pente de la rampe interne R ne reprend pas instantanément sa valeur initiale Pi mais suit une augmentation progressive suivant une constante de temps déterminée (42). L'augmentation de la valeur de la pente de la rampe interne R suit donc une progression constante et linéaire entre sa valeur nulle et sa valeur initiale Pi. Des moyens de commande du variateur de vitesse sont aptes à commander cette augmentation progressive de la valeur de la pente de la rampe interne R lorsque celle-ci est libérée. Ainsi, la décélération du moteur reprend doucement et sans à-coup (44). L'augmentation progressive de la pente de la rampe interne R peut se produire jusqu'à ce que la pente retrouve sa valeur initiale Pi. Néanmoins, s'il s'avère que, lors de l'augmentation progressive de la valeur de la pente, la valeur de la tension Vbus mesurée sur le bus continu devient de nouveau supérieure à la valeur limite Vlim, la sortie positive du comparateur 10 active de nouveau le régulateur 11. Comme précédemment, la sortie positive du régulateur 11 vient alors agir de nouveau sur la rampe interne R en annulant la valeur de sa pente (43). La fréquence du stator Wstat est ainsi maintenue de nouveau à une valeur constante (45). La libération de la rampe interne R interviendra lorsque la tension Vbus mesurée sur le bus continu sera de nouveau inférieure à la valeur limite Vlim. La pente de la rampe interne R suivra alors de nouveau une augmentation progressive (46) de sa valeur nulle jusqu'à, au maximum, sa valeur initiale Pi.

Lors d'un freinage excessif du moteur M, les différentes étapes décrites ci-dessus peuvent se reproduire successivement afin de faire suivre au moteur M une décélération lente, suivant une courbe la plus linéaire possible (figure 4).

Lors de la coupure du réseau de distribution de courant Rd, la fréquence de référence Wref diminue également très fortement et devient nulle très rapidement (50, figure 5). Cette situation s'apparente donc à un freinage excessif du moteur et peut occasionner comme dans la situation précédente, des surtensions sur le condensateur du bus continu du variateur de vitesse. Cependant, dans cette situation, étant donné que le réseau Rd ne peut plus fournir aucun courant, il s'agit de contrôler la décélération du moteur M pour maintenir le moteur M en fonctionnement le plus longtemps possible en vue d'un possible rétablissement du réseau de distribution Rd. Pour éviter l'arrêt complet et rapide du moteur M, il est nécessaire de gérer la tension Vbus sur le bus continu en la maintenant à une valeur suffisante pour alimenter les circuits électroniques portés par le bus continu. Lorsqu'une coupure du réseau de distribution de courant Rd est détectée, on abaisse donc la valeur limite Vlim à une valeur inférieure (51, Vlimab) correspondant à la valeur de tension minimale pour alimenter les circuits électroniques présents sur le bus continu. Une fois que la valeur limite Vlim a été abaissée, le procédé de gestion de la tension Vbus sur le bus continu mis en oeuvre dans le cas d'un freinage excessif du moteur M et décrit ci-dessus peut se dérouler de la même manière. Selon ce procédé, on assiste à la diminution (52) de la fréquence du stator Wstat et donc à une décélération lente et progressive du moteur M. En limitant la tension Vbus mesurée sur le bus continu à une valeur sensiblement égale à la valeur limite abaissée Vlimab, on optimise la consommation du courant encore disponible pour maintenir le moteur M en fonctionnement aussi longtemps que possible en vue d'un éventuel rétablissement du réseau de distribution de courant Rd.

Selon l'invention, pour augmenter l'efficacité de la protection du condensateur, dés le début d'une décélération, donc dés qu'une baisse de la fréquence de référence Wref est détectée, la pente de la rampe interne R peut être mise d'office à une valeur égale à zéro (47) même si la tension Vbus mesurée sur le bus continu n'a pas encore augmenté.

Le système selon l'invention permet également de gérer les surtensions sur le bus continu lorsque le moteur M se trouve entraîné par la charge. Dans le circuit 1 de régulation de tension du système selon l'invention, on utilise un intégrateur 12 (figure 3) disposé en sortie du régulateur 11. Le régulateur 11 apporte donc, à travers l'intégrateur 12, une correction à la fréquence du stator Wstat. Cet intégrateur 12 permet de calculer une valeur de correction à appliquer directement à la fréquence du stator Wstat afin d'obtenir une fréquence du stator corrigée Wstatc.

Lorsque le moteur M est entraîné par la charge, la fréquence de référence Wref est constante et la rampe interne R n'est pas active puisque aucune décélération n'a été commandée. Néanmoins, dans cette situation, la tension Vbus mesurée sur le bus continu peut prendre une valeur supérieure à la valeur limite Vlim. Lorsque la tension Vbus mesurée sur le bus continu est supérieure à la valeur limite Vlim, la sortie positive du comparateur 10 active le régulateur 11. La sortie positive du régulateur 11 active également l'intégrateur 12 situé en aval qui calcule alors une valeur de correction. Cette valeur de correction correspond au gain de fréquence à appliquer à la fréquence du stator pour que la tension Vbus mesurée sur le bus continu tombe à une valeur inférieure ou égale à la valeur limite Vlim. Ce gain de fréquence est donc calculé par l'intégrateur 12 à partir de la différence entre la tension Vbus mesurée sur le bus continu et la valeur limite Vlim.

Lorsque la tension Vbus mesurée sur le bus continu est à une valeur inférieure à la valeur limite, la sortie du régulateur 11 est négative et la sortie de l'intégrateur 12 est limitée à zéro de manière à, dans ce cas, n'appliquer aucune correction à la fréquence du stator Wstat. En revanche, lorsque la tension (Vbus) mesurée sur le bus est égale à la valeur limite Vlim, l'intégrateur 12 a la propriété de fournir une sortie non nulle même quand l'entrée est nulle. Ainsi, cela permet d'appliquer une correction à la fréquence du stator Wstat même lorsque la tension Vbus mesurée sur le bus est égale à la valeur limite Vlim.

Il est bien entendu que l'on peut, sans sortir du cadre de l'invention, imaginer d'autres variantes et perfectionnements de détail et de même envisager l'emploi de moyens équivalents.

## Revendications

1. Procédé de gestion de la tension (Vbus) sur le bus continu d'un variateur de vitesse pour moteur (M) électrique à courant alternatif relié à un réseau de distribution de courant (Rd), ledit variateur comportant sur son bus continu des circuits électroniques (20, 21, 22) et fonctionnant selon une loi de commande en tension de type U/F dans laquelle une rampe interne (R) d'accélération/décélération du moteur, ayant une pente de valeur initiale (Pi) déterminée, est intercalée entre une fréquence de référence (Wref) imposée en entrée de la loi de commande dudit variateur de vitesse et une fréquence du stator (Wstat) obtenue en sortie de cette loi, ledit procédé étant **caractérisé en ce qu'**il consiste à :
- Comparer une valeur de la tension (Vbus) mesurée sur le bus continu avec une valeur limite (Vlim) déterminée,
- lorsque la valeur de la tension (Vbus) mesurée sur le bus continu devient supérieure à la valeur limite (Vlim), forcer la pente de la rampe interne (R) à une valeur nulle afin de conférer au stator une fréquence (Wstat) constante,
- lorsque la valeur de la tension (Vbus) mesurée sur le bus continu devient de nouveau inférieure à la valeur limite (Vlim), augmenter progressivement la valeur de la pente de la rampe interne (R).

2. Procédé selon la revendication 1, **caractérisé en ce que** l'augmentation progressive de la valeur de la pente de la rampe interne (R) se produit suivant une constante de temps déterminée.

3. Procédé selon la revendication 1 ou 2, **caractérisé en ce que** l'augmentation progressive de la pente de la rampe interne (R) est réalisée entre sa valeur nulle et sa valeur initiale (Pi).

4. Procédé selon l'une des revendications 1 à 3, **caractérisé en ce que**, dès l'instant où une baisse de la fréquence de référence (Wref) est détectée, la valeur de la pente de la rampe interne (R) est mise à zéro.

5. Procédé selon l'une des revendications 1 à 4, **caractérisé en ce que**, lorsque la fréquence de référence (Wref) est constante et lorsque la valeur de la tension (Vbus) mesurée sur le bus continu est supérieure ou égale à la valeur limite (Vlim), il consiste également à calculer à l'aide d'un intégrateur (12) une valeur de correction à la fréquence du stator (Wstat) et à ajouter cette valeur calculée à la fréquence du stator (Wstat).

6. Procédé selon la revendication 5, **caractérisé en ce que** lorsque la tension (Vbus) mesurée sur le bus continu a une valeur inférieure à la valeur limite (Vlim), la sortie de l'intégrateur (12) est mise à zéro de manière à n'appliquer aucune correction à la fréquence du stator (Wstat).

7. Procédé selon l'une des revendications 1 à 6, **caractérisé en ce que** lorsqu'une coupure du réseau de distribution de courant est détectée, il consiste également à abaisser la valeur limite (Vlim) à une valeur minimale définie comme la valeur de tension suffisante pour alimenter les circuits électroniques (20, 21, 22) du bus continu.

8. Système de gestion de la tension sur le bus continu d'un variateur de vitesse pour moteur (M) électrique à courant alternatif relié à un réseau de distribution de courant, ledit variateur comportant sur son bus continu des circuits électroniques et fonctionnant selon une loi de commande en tension de type U/F dans laquelle une rampe interne (R) d'accélération/décélération du moteur, ayant une pente de valeur initiale (Pi) déterminée, est intercalée entre une fréquence de référence (Wref) définie en entrée de ladite loi de commande et la fréquence (Wstat) imposée au stator en sortie de ladite loi de commande, ledit système étant **caractérisé en ce qu'**il comprend :
- Un circuit (1) de régulation de la tension comportant des moyens (10) pour comparer la valeur d'une tension (Vbus) mesurée sur le bus continu à une valeur limite et, lorsque la valeur de la tension mesurée sur le bus continu est supérieure à une valeur limite, des moyens (11) pour forcer la pente de la rampe interne (R) à une valeur nulle afin de maintenir la fréquence du stator (Wstat) à une valeur constante, et
- lorsque la valeur de la tension (Vbus) mesurée sur le bus continu devient inférieure à la valeur limite (Vlim), des moyens de commande pour commander une augmentation progressive de la valeur de la pente de la rampe interne (R).

9. Système selon la revendication 8, **caractérisé en ce que** les moyens de commande comportent une constante de temps déterminée suivant laquelle se produit l'augmentation progressive de la valeur de la pente de la rampe interne.

10. Système selon la revendication 8 ou 9, **caractérisé en ce qu**'il comprend également des moyens pour mettre la pente de la rampe interne à une valeur nulle dès l'instant où une décélération de la fréquence du stator (Wstat) est commandée.

11. Système selon l'une des revendications 8 à 10, **caractérisé en ce que** le circuit (1) de régulation de tension comporte également un intégrateur (12) apte à calculer une fréquence de correction à imposer à la fréquence du stator lorsque la fréquence de référence est constante et lorsque la tension (Vbus) mesurée sur le bus continu a une valeur supérieure ou égale à la valeur limite (Vlim).

12. Système selon la revendication 11, **caractérisé en ce que** l'intégrateur (12) comporte des moyens pour limiter sa sortie à une valeur égale à zéro lorsque la tension (Vbus) mesurée sur le bus continu a une valeur inférieure à la valeur limite (Vlim).

13. Système selon l'une des revendications 8 à 12, **caractérisé en ce qu**'il comprend des moyens pour détecter une coupure du réseau de distribution de courant (Rd) et pour, dans cette situation, abaisser la valeur limite (Vlim) à une valeur (Vlimab) minimale définie comme la valeur de tension suffisante pour alimenter les circuits électroniques (20, 21, 22) du bus continu du variateur de vitesse.

## Claims

1. Method for managing the voltage (Vbus) on the DC bus of a speed controller for an AC electric motor (M) linked to a current distribution network (Rd), the said controller comprising on its DC bus electronic circuits (20, 21, 22) and operating according to a voltage control law of U/F type in which an internal ramp (R) of acceleration/deceleration of the motor, having an initial slope of determined value (Pi), is inserted between a reference frequency (Wref) imposed as input of the control law of the said speed controller and a frequency of the stator (Wstat) obtained as output of this law, the said method being **characterized in that** it consists in :
- comparing a value of the voltage (Vbus) measured on the DC bus with a determined limit value (Vlim),
- when the value of the voltage (Vbus) measured on the DC bus becomes greater than the limit value (Vlim), forcing the slope of the internal ramp (R) to a zero value so as to confer a constant frequency (Wstat) on the stator,
- when the value of the voltage (Vbus) measured on the DC bus again becomes less than the limit value (Vlim), progressively increasing the value of the slope of the internal ramp (R).

2. Method according to Claim 1, **characterized in that** the progressive increase in the value of the slope of the internal ramp (R) occurs in accordance with a determined time constant.

3. Method according to Claim 1 or 2, **characterized in that** the progressive increase in the slope of the internal ramp (R) is effected between its zero value and its initial value (Pi).

4. Method according to one of Claims 1 to 3, **characterized in that**, right from the instant at which a dip in the reference frequency (Wref) is detected, the value of the slope of the internal ramp (R) is set to zero.

5. Method according to one of Claims 1 to 4, **characterized in that**, when the reference frequency (Wref) is constant and when the value of the voltage (Vbus) measured on the DC bus is greater than or equal to the limit value (Vlim), it also consists in calculating with the aid of an integrator (12) a correction value for the frequency of the stator (Wstat) and in adding this calculated value to the frequency of the stator (Wstat).

6. Method according to Claim 5, **characterized in that** when the voltage (Vbus) measured on the DC bus has a value less than the limit value (Vlim), the output of the integrator (12) is set to zero so as to apply no correction to the frequency of the stator (Wstat).

7. Method according to one of Claims 1 to 6, **characterized in that** when an outage of the current distribution network is detected, it also consists in lowering the limit value (Vlim) to a minimum value defined as the voltage value sufficient to power the electronic circuits (20, 21, 22) of the DC bus.

8. System for managing the voltage on the DC bus of a speed controller for an AC electric motor (M) linked to a current distribution network, the said controller comprising on its DC bus electronic circuits and operating according to a voltage control law of U/F type in which an internal ramp (R) of acceleration/deceleration of the motor, having an initial slope of determined value (Pi), is inserted between a reference frequency (Wref) defined as input of the said control law and the frequency (Wstat) imposed on the stator as output of the said control law, the said system being **characterized in that** it comprises:
- a voltage regulating circuit (1) comprising means (10) for comparing the value of a voltage (Vbus) measured on the DC bus with a limit value and, when the value of the voltage measured on the DC bus is greater than a limit value, means (11) for forcing the slope of the internal ramp (R) to a zero value so as to maintain the frequency of the stator (Wstat) at a constant value, and
- when the value of the voltage (Vbus) measured on the DC bus becomes less than the limit value (Vlim), means of control for instructing a progressive increase in the value of the slope of the internal ramp (R).

9. System according to Claim 8, **characterized in that** the means of control comprise a determined time constant in accordance with which the progressive increase in the value of the slope of the internal ramp occurs.

10. System according to Claim 8 or 9, **characterized in that** it also comprises means for setting the slope of the internal ramp to a zero value right from the instant at which a deceleration of the frequency of the stator (Wstat) is instructed.

11. System according to one of Claims 8 to 10, **characterized in that** the voltage regulating circuit (1) also comprises an integrator (12) able to calculate a correction frequency to be imposed on the frequency of the stator when the reference frequency is constant and when the voltage (Vbus) measured on the DC bus has a value greater than or equal to the limit value (Vlim).

12. System according to Claim 11, **characterized in that** the integrator (12) comprises means for limiting its output to a value equal to zero when the voltage (Vbus) measured on the DC bus has a value less than the limit value (Vlim).

13. System according to one of Claims 8 to 12, **characterized in that** it comprises means for detecting an outage of the current distribution network (Rd) and for, in this situation, lowering the limit value (Vlim) to a minimum value (Vlimab) defined as the voltage value sufficient to power the electronic circuits (20, 21, 22) of the DC bus of the speed controller.

## Patentansprüche

1. Verfahren zum Steuern der Spannung (Vbus) auf dem Gleichstrombus eines Drehzahlvariators für einen Wechselstrom-Elektromotor (M), der mit einem Stromverteilernetz (Rd) verbunden ist, wobei der Variator in seinem Gleichstrombus elektronische Schaltungen (20, 21, 22) enthält und gemäß einem Spannungssteuergesetz des U/F-Typs arbeitet, in dem zwischen eine Referenzfrequenz (Wref), die in den Eingang des Steuergesetzes des Drehzahlvariators eingegeben wird, und eine Statorfrequenz (Wstat), die am Ausgang dieses Gesetzes erhalten wird, eine interne Rampe (R) für die Beschleunigung/Verzögerung des Motors, die eine Steigung mit einem bestimmten Anfangswert (Pi) hat, eingefügt wird, wobei das Verfahren **dadurch gekennzeichnet ist, dass** es darin besteht:
- einen Wert der auf dem Gleichstrombus gemessenen Spannung (Vbus) mit einem bestimmten Grenzwert (Vlim) zu vergleichen,
- dann, wenn der Wert der auf dem Gleichstrombus gemessenen Spannung (Vbus) größer als der Grenzwert (Vlim) wird, die Steigung der internen Rampe (R) auf einen Wert null zu zwingen, um dem Stator eine konstante Frequenz (Wstat) zu verleihen, und
- dann, wenn der Wert der auf dem Gleichstrombus gemessenen Spannung (Vbus) wieder kleiner als der Grenzwert (Vlim) wird, den Wert der Steigung der internen Rampe (R) progressiv zu erhöhen.

2. Verfahren nach Anspruch 1, **dadurch gekennzeichnet, dass** die progressive Erhöhung des Wertes der Steigung der internen Rampe (R) mit einer bestimmten Zeitkonstante erfolgt.

3. Verfahren nach Anspruch 1 oder 2, **dadurch gekennzeichnet, dass** die progressive Erhöhung der Steigung der internen Rampe (R) zwischen ihrem Wert null und ihrem Anfangswert (Pi) ausgeführt wird.

4. Verfahren nach einem der Ansprüche 1 bis 3, **dadurch gekennzeichnet, dass** ab dem Zeitpunkt, zu dem eine Absenkung der Referenzfrequenz (Wref) erfasst wird, der Wert der Steigung der internen Rampe (R) auf null gesetzt wird.

5. Verfahren nach einem der Ansprüche 1 bis 4, **dadurch gekennzeichnet, dass** es dann, wenn die Referenzfrequenz (Wref) konstant ist und wenn der Wert der auf dem Gleichstrombus gemessenen Spannung (Vbus) größer oder gleich dem Grenzwert (Vlim) ist, außerdem darin besteht, mit Hilfe eines Integrators (12) einen Wert für die Korrektur der Statorfrequenz (Wstat) zu berechnen und diesen berechneten Wert zu der Statorfrequenz (Wstat) hinzuzufügen.

6. Verfahren nach Anspruch 5, **dadurch gekennzeichnet, dass** dann, wenn die auf dem Gleichstrombus gemessene Spannung (Vbus) einen Wert hat, der kleiner als der Grenzwert (Vlim) ist, der Ausgang des Integrators (12) auf null gesetzt wird, derart, dass auf die Statorfrequenz (Wstat) keinerlei Korrektur angewendet wird.

7. Verfahren nach einem der Ansprüche 1 bis 6, **dadurch gekennzeichnet, dass** es dann, wenn eine Unterbrechung des Stromverteilernetzes erfasst wird, außerdem darin besteht, den Grenzwert (Vlim) auf einen Minimalwert abzusenken, der als der Wert der Spannung definiert ist, die ausreicht, um die elektronischen Schaltungen (20, 21, 22) des Gleichstrombusses zu versorgen.

8. System für die Steuerung der Spannung auf dem Gleichstrombus eines Drehzahlvariators für einen Wechselstrom-Elektromotor (M), der mit einem Stromverteilernetz verbunden ist, wobei der Variator in seinem Gleichstrombus elektronische Schaltungen enthält und gemäß einem Spannungssteuergesetz des U/F-Typs arbeitet, gemäß dem zwischen eine Referenzfrequenz (Wref), die am Eingang des Steuergesetzes definiert ist, und die Frequenz (Wstat), die in den Stator am Ausgang des Steuergesetzes eingegeben wird, eine interne Rampe (R) der Beschleunigung/Verzögerung des Motors, die eine Rampe mit einem bestimmten Anfangswert (Pi) hat, eingefügt wird, **dadurch gekennzeichnet, dass** es enthält:
- eine Spannungsreglerschaltung (1), die Mittel (10), um den Wert einer auf dem Gleichstrombus gemessenen Spannung (Vbus) mit einem Grenzwert zu vergleichen, und Mittel (11), um dann, wenn der Wert der auf dem Gleichstrombus gemessenen Spannung größer als ein Grenzwert ist, die Steigung der internen Rampe (R) auf einen Wert null zu zwingen, um die Statorfrequenz (Wstat) auf einem konstanten Wert zu halten, enthält, und
- Steuermittel, um dann, wenn der Wert der auf dem Gleichstrombus gemessenen Spannung (Vbus) kleiner als der Grenzwert (Vlim) wird, eine progressive Erhöhung des Wertes der Steigung der internen Rampe (R) zu steuern.

9. System nach Anspruch 8, **dadurch gekennzeichnet, dass** die Steuermittel eine bestimmte Zeitkonstante aufweisen, mit der die progressive Erhöhung des Wertes der Steigung der internen Rampe erfolgt.

10. System nach Anspruch 8 oder 9, **dadurch gekennzeichnet, dass** es außerdem Mittel enthält, um die Steigung der internen Rampe ab dem Zeitpunkt, zu dem eine Verzögerung der Statorfrequenz (Wstat) befohlen wird, auf einen Wert null zu setzen.

11. System nach einem der Ansprüche 8 bis 10, **dadurch gekennzeichnet, dass** die Spannungsreglerschaltung (1) außerdem einen Integrator (12) enthält, der eine Korrekturfrequenz berechnen kann, die auf die Statorfrequenz anzuwenden ist, wenn die Referenzfrequenz konstant ist und wenn die auf dem Gleichstrombus gemessene Spannung (Vbus) einen Wert hat, der größer oder gleich dem Grenzwert (Vlim) ist.

12. System nach Anspruch 11, **dadurch gekennzeichnet, dass** der Integrator (12) Mittel enthält, um seinen Ausgang auf einen Wert zu begrenzen, der gleich null ist, wenn die auf dem Gleichstrombus gemessene Spannung (Vbus) einen Wert hat, der kleiner als der Grenzwert (Vlim) ist.

13. System nach einem der Ansprüche 8 bis 12, **dadurch gekennzeichnet, dass** es Mittel enthält, um eine Unterbrechung des Stromverteilernetzes (Rd) zu erfassen und um in dieser Situation den Grenzwert (Vlim) auf einen minimalen Wert (Vlimab) abzusenken, der als der Wert der Spannung definiert ist, die ausreicht, um die elektronischen Schaltungen (20, 21, 22) des Gleichstrombusses des Drehzahlvariators zu versorgen.
